# EUROPEAN PATENT APPLICATION

(11) **EP 1 102 276 A1**
(43) Date of publication of application: **23.05.2001**
(21) Application number: 00309067.7
(22) Date of filing: 16.10.2000
(51) Int. Cl.: G11B 27/32, G11B 27/30, G11B 27/032

(54) **Method of recording and accessing metadata**

(30) Priority: 05.11.1999 GB 9926321
(71) Applicant: SONY UNITED KINGDOM LIMITED, Weybridge KT13 0XW (GB)
(72) Inventor: Wilkinson, James Hedley, Tadley, Hampshire RG26 4UN (GB)
(74) Representative: Pratt, Richard Wilson

(57) **Abstract**

Metadata is recorded in the user bits of time codes on a video record such as tape. The metadata preferably includes a UMID (Unique Material Identifier).

The UMID acts as a link between minimal metadata recorded on the tape and more extensive metadata stored with the UMID in a separate database.

## Description

The present invention relates to recording metadata relating to recorded material. The present invention also relates to using the recorded metadata to access further metadata relating to the recorded material.

In embodiments of the present invention, the recorded material comprises video information, and may also comprise audio information. In the embodiments of the present invention metadata is information related to the recorded video information (and the audio information if provided). The following refers to video information by way of example, and for clarity, but in its broadest aspects the ideas of the invention may be applied to other data.

When a video sequence is recorded it is essential to at least identify the data carrier, such as tape or disc, on which it is recorded. Conventionally the sequence is identified on a physical label attached to the carrier. It is also desirable to record such data on the carrier with the video sequence. The recorded data is one example of metadata. However, it is naturally desirable to maximise the video information recorded so as to aid video production operations. The video information is recorded on tape in helical scan tracks. Linear control and time code tracks are also provided on the tape. Also audio information, and control information such as time codes are typically recorded in the helical tracking. A linear audio cue track may also be provided on the tape [1]. Consequently, there are problems of: how or where to record metadata; and what metadata to record on a data carrier so as to provide useful information but at the same time to minimise the information recorded.

The paper " Essence & Metadata Linking via the UMID" IEE NBSS 6 July 1999 by J.H.Wilkinson, Sony B.P.E, UK. describes the SMPTE UMID and describes how a UMID carried with the "Essence" ie. raw picture/audio information, may be used to link that Essence to other metadata stored in a computer storage system. The UMID may be carried in the VBI (Vertical Blanking Internal) of the video, or embedded in user bits of an AES 3 Audio Channel, if such an Audio channel is provided.

Using the VBI or the AES 3 audio channel for the recording of metadata, reduces the space available on a carrier, e.g. a disc or tape, to record the video or audio information on for audio. If the video is MPEG and the VBI data is stored in the Video-Elementary Stream (V-ES) it may reduce the space available for the compressed video bitstream.

According to one aspect of the present invention, there is provided a method of recording information relating to a sequence of data fields, e.g. video fields or frames, each of which data fields has associated therewith a timecode identifying the said data field, the code having time bits which identify the data field and user bits which are definable by a user,
in which method bits of additional data relating to the said sequence, and comprising a number of bits much greater than the number of user bits in a single timecode are allocated to user bits of a plurality of time codes of the said sequence.

By using the user bits of the sequence of time codes to record the bits of additional data, the additional data is recorded in data space already available without requiring additional data space on the data carrier.

The additional data may comprise only an identifier which uniquely identifies the material, for example, a basic or extended UMID (Unique Material Identifier) [2]. Furthermore, some bytes of all such UMIDs will be identical and this can be represented by a short code to reduce the amount of data, i.e. a "shortened UMID".

In currently preferred embodiments of the invention, the additional data comprises at least the "UMID" or shortened UMID and may include other data such as data descriptive of the content of the sequence and/or technical data relating to the sequence. An example of descriptive data is a title and/or short synopsis. An example of the technical data is aspect ratio and/or clip start code. Thus the material is uniquely identified by the UMID and a small amount of the other data is recorded to give other useful information about the material.

Preferably, the additional data is arranged in a format comprising a plurality of bytes representing a label identifying the format, at least one byte representing a length value indicating the number of bits (of additional data) in the format, and a plurality of data bytes representing additional data.

An example of such a format is a key-length-value format proposed by SMPTE [3].

The UMID is an example of metadata. The additional data is also an example of metadata.

The amount of metadata which can be recorded in the user bits of time codes is small because time codes are typically produced once per field and typical known time codes [1] comprise only 32 user bits per field. At 50 fields per second, only 200 bytes (of 8 bits) are available per second.

However it is desirable to provide much more information (metadata) relating to the video sequence than can be recorded in the user bits of the time codes.

According to another aspect of the invention there is provided a method of linking recorded material including a sequence of data fields, e.g. video fields or frames, to a database, comprising
a) providing a database for containing metadata relating to recorded material the metadata including an identified which uniquely identifies the material, e.g. a UMID,
b) recording with the recorded material an identifier, e.g. a UMID, and other metadata, the identifier and other metadata being allocated to user bits of a plurality of time codes of the said sequence, which time codes are recorded with the material, and
c) reproducing the identifier and other metadata from the recorded material and using reproduced identifier to access further metadata including the same identifier stored in the database and relating to the material.

According to a further aspect of the invention, there is provided a system for linking recorded material including a sequence of data fields, e.g. video fields or frames, to a database, comprising a database for containing metadata relating to recorded material, the metadata in the database including an identifier which uniquely identifies the material, e.g. a UMID, a recorder for recording with the recorded material an identifier or a shortened representation of an identifier and other metadata, the identifier or the shortened representation and other metadata being allocated to user bits of a plurality of time codes of the said sequence, which time codes are recorded with the material, a data transmission link linking the recorder to the database, and a deriver in the database for deriving the identifier and other metadata from the transmitted recorded material, the database using the derived identifier to access further metadata including the same identifier stored in the database and relating to the material.

Providing metadata including at least an identifier, e.g. UMID and other data in the user bits of time codes allows a small amount of useful information to be recorded on the data carrier.

The database allows the storage of much more extensive and more easily edited metadata relating to the recorded material. The metadata is more easily editable in the database than on the record carrier. The identifier, e.g. UMID which is recorded on the data carrier and also in the portion of the data base relating to the recorded material is universally unique to the material and allows the database to be readily and uniquely accessed.

The material is recorded on a data carrier. The data carrier is preferably a tape; or a disc. The material is preferably recorded digitally (as is the additional data). The material may be recorded uncompressed or compressed, for example in accordance with the MPEG2 standard. [4]

A yet further aspect of the invention provides a recorder for recording material including a sequence of data fields, e.g. video fields or frames, the recorder including a generator for generating an identifier which uniquely identifies the material, e.g. a UMID or a shortened representation of an identifier and a coder for inserting the identifier or the representation thereof into the user bits of a plurality of time codes of the said sequence.

For a better understanding of the present invention, reference will now be made by way of example to the accompanying drawings in which:
Figure 1 schematically illustrates a known tape format;
Figure 2 schematically illustrates a time code;
Figure 3 schematically illustrates basic and extended UMID data structures;
Figure 4 schematically illustrates a data structure for metadata sets;
Figure 5 illustrates several clips and associated data structures recorded on a tape;
Figure 6 illustrates another data structure;
Figure 7 illustrates yet another data structure; and
Figure 8 schematically illustrates a system in which a database is accessed using metadata recorded with video and audio material in accordance with the present invention.

### Overview

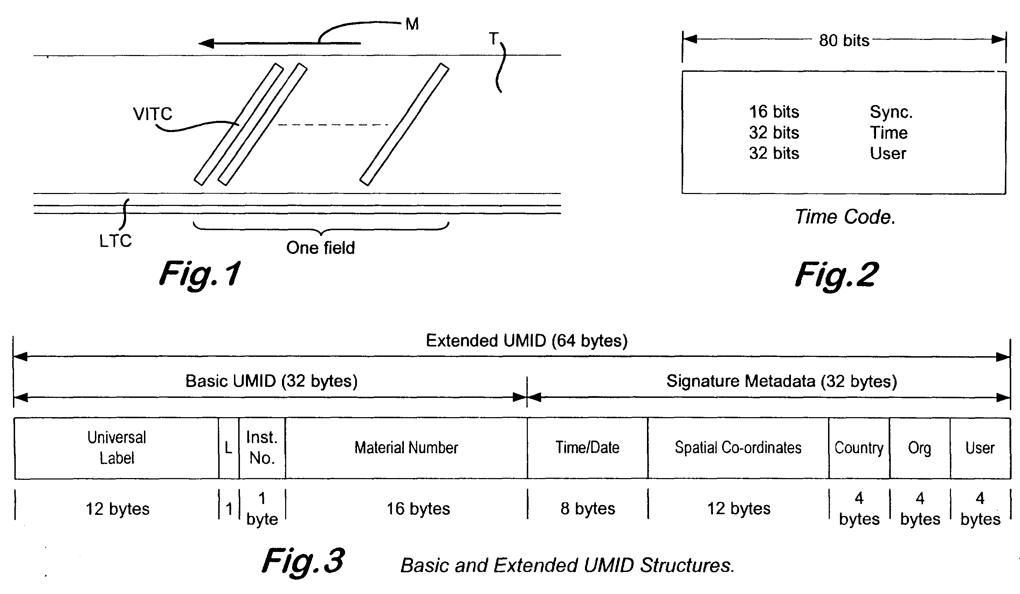

Referring to Figure 1, a tape format is shown schematically. Video and audio information is recorded in helical tracks of which a set of, e.g. 10 or 12, tracks records one field of video. The helical tracks include vertical interval time codes (VITC). The time codes are duplicated in a linear time code track LTC. The tape may comprise at least one other linear track (not shown). In this illustrative description it is assumed that all video, audio and other information is recorded digitally. However, the video and audio may be recorded as analogue information. The video and audio information may be compressed according to the MPEG 2 standard for example.

The time codes are recorded once per video field. As schematically shown in Figure 2, a known time code has 80 bits of which 16 are reserved for synchronisation information, 32 for time code bits and 32 for user defined bits, herein referred to as "user bits". The user bits are interleaved with the other bits in a typical time code; however the invention is not limited to that.

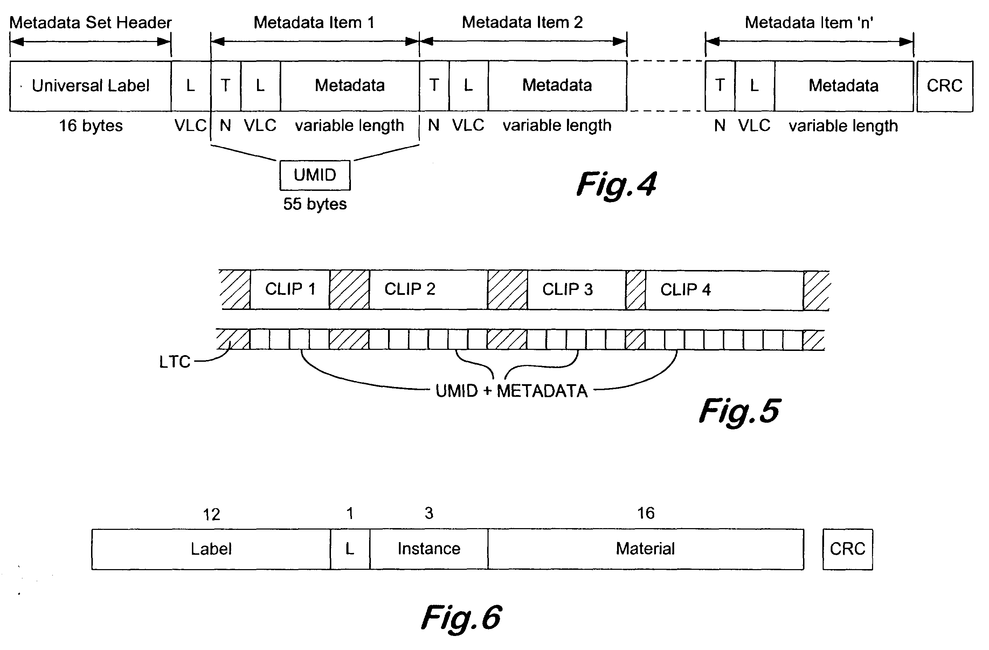

Referring to Figures 3 and 4, in accordance with an embodiment of the present invention, a metadata set (Figure 4) of for example 200 bytes, including a UMID (Figure 3), is recorded on the tape together with the Essence, i.e. raw video material and audio material it identifies, in the user bits of a sequence of 50 time codes. It will be appreciated that the number of bytes in the metadata set and the number of time codes used to record the metadata set are illustrative and other numbers of bytes and numbers of time codes may be chosen. For example the set may include 400 bytes occupying 100 time codes.

The metadata set of Figure 4 relating to the video sequence includes, as a metadata item, a UMID uniquely identifying the video sequence. The UMID will be described in more detail hereinbelow with reference to Figure 3. The metadata set also includes, as other metadata items, other information chosen by the user and relating to the video sequence. The metadata set of Figure 4 will be described in more detail hereinbelow. Because, in this example the metadata set is 200 bytes, the amount of information recordable in one set is small.

Referring to Figures 5, video clips, clip 1, clip 2, clip 3, .. are recorded on a tape. Each clip is identified by a metadata set including a UMID and other metadata. The UMID uniquely identifies the clip:- there is one UMID per clip.

The metadata set including the UMID and the other metadata is repeated during the clip as often as possible as allowed by the length of the clip.

The metadata recorded, in addition to the UMID is for example:
a) Program title
b) Material name
c) a short synopsis of the material
d) Material Type
e) a good shot mark
f) a clip stop time code
g) source aspect ratio

Items a), b), c) and d) may be regarded as data descriptive of the video sequence.

Items e), f) and g) may be regarded as technical data relating to the sequence.
"Material Name" is a title, for example "Kosovo Field Report" for a clip filmed in Kosovo.
"Material Type" indicates whether the recorded material is still video or moving video.
"Source Aspect Ratio" indicates the aspect ratio of the images recorded on the tape.

It is believed the other items are self-explanatory.

Other information may be provided instead of, or in addition to, the examples a) to g).

The information to be recorded is chosen to be small but significant.

### UMID

The UMID is described in reference [2]. Referring to Figure 3, an extended UMID is shown. It comprises a first set of 32 bytes of basic UMID and a second set of 32 bytes of signature metadata.

The first set of 32 bytes is the basic UMID. The components are:
•A 12-byte Universal Label to identify this as a SMPTE UMID. It defines the type of material which the UMID identifies and also defines the methods by which the globally unique Material and locally unique Instance numbers are created.
•A 1-byte length value to define the length of the remaining part of the UMID.
•A 3-byte Instance number which is used to distinguish between different 'instances' of material with the same Material number.
•A 16-byte Material number which is used to identify each clip. Each Material number is the same for related instances of the same material.

The second set of 32 bytes of the signature metadata as a set of packed metadata items used to create an extended UMID. The extended UMID comprises the basic UMID followed immediately by signature metadata which comprises:
•An 8-byte time/date code identifying the time and date of the Content Unit creation.
•A 12-byte value which defines the spatial co-ordinates at the time of Content Unit creation.
•3 groups of 4-byte codes which register the country, organisation and user codes

Each component of the basic and extended UMIDs will now be defined in turn.

### The 12-byte Universal Label

The first 12 bytes of the UMID provide identification of the UMID by the registered string value defined in table 1.

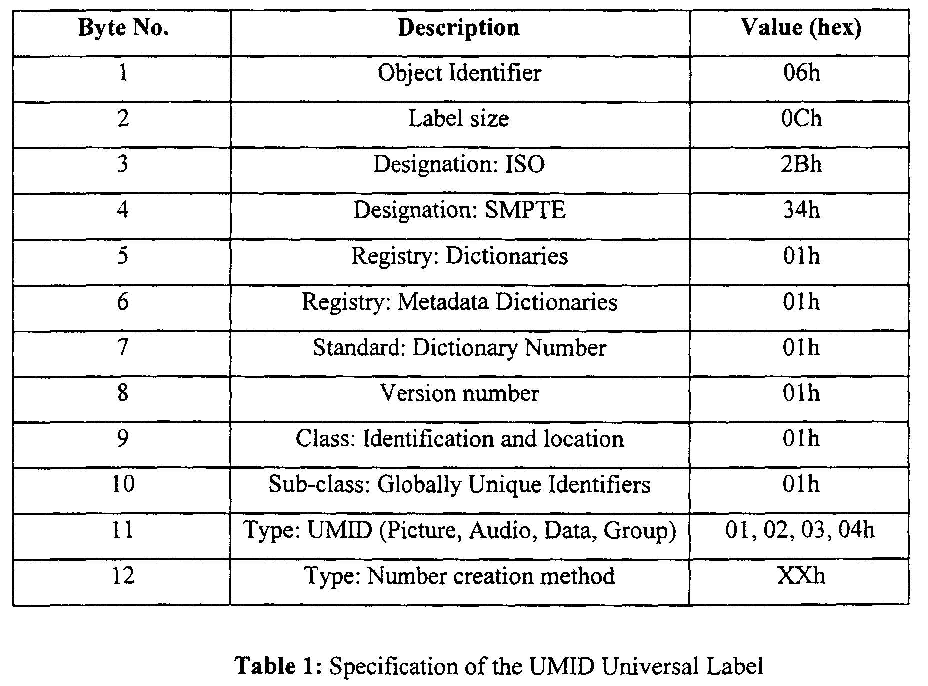

The hex values in table 1 may be changed: the values given are examples. Also the bytes 1-12 may have designations other than those shown by way of example in the table. Referring to the Table 1, in the example shown byte 4 indicates that bytes 5-12 relate to a data format agreed by SMPTE. Byte 5 indicates that bytes 6 to 10 relate to "dictionary" data. Byte 6 indicates that such data is "metadata" defined by bytes 7 to 10. Byte 7 indicates the part of the dictionary containing metadata defined by bytes 9 and 10. Byte 10 indicates the version of the dictionary. Byte 9 indicates the class of data and Byte 10 indicates a particular item in the class.

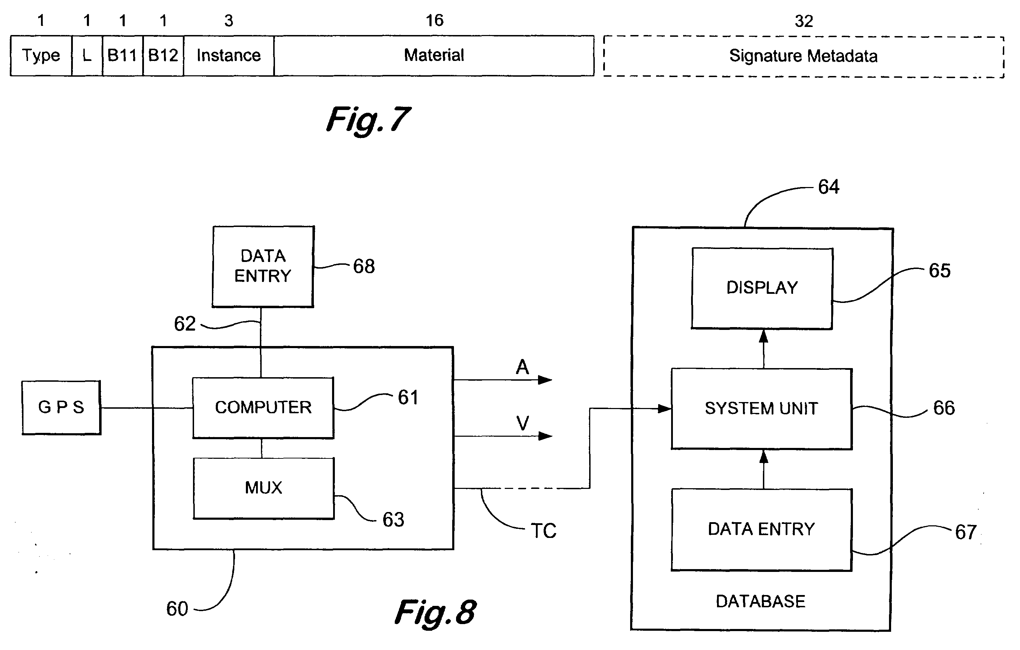

In the present embodiment bytes 1 to 10 have fixed preassigned values. Byte 11 is variable. Thus referring to Figure 7, and to Table 1 above, it will be noted that the bytes 1 to 10 of the label of the UMID are fixed. Therefore they may be replaced by a 1 byte 'Type' code T representing the bytes 1 to 10. The type code T is followed by a length code L. That is followed by 2 bytes, one of which is byte 11 of Table 1 and the other of which is byte 12 of Table 1, an instance number (3 bytes) and a material number (16 bytes). Optionally the material number may be followed by the signature metadata of the extended UMID and/or other metadata.

The UMID type (byte 11) has 4 separate values to identify each of 4 different data types as follows:
'01h' = UMID for Picture material
'02h' = UMID for Audio material
'03h' = UMID for Data material
'04h' = UMID for Group material (i.e. a combination of related essence).

The last (12th) byte of the 12 byte label identifies the methods by which the material and instance numbers are created. This byte is divided into top and bottom nibbles where the top nibble defines the method of Material number creation and the bottom nibble defines the method of Instance number creation.

### Length

The Length is a 1-byte number with the value '13h' for basic UMIDs and '33h' for extended UMIDs.

### Instance Number

The Instance number is a unique 3-byte number which is created by one of several means defined by the standard. It provides the link between a particular 'instance' of a clip and externally associated metadata. Without this instance number, all material could be linked to any instance of the material and its associated metadata.

The creation of a new clip requires the creation of a new Material number together with a zero Instance number. Therefore, a non-zero Instance number indicates that the associated clip is not the source material. An Instance number is primarily used to identify associated metadata related to any particular instance of a clip.

### Material Number

The 16-byte Material number is a non-zero number created by one of several means identified in the standard. The number is dependent on a 6-byte registered port ID number, time and a random number generator.

### Signature Metadata

Any component from the signature metadata may be null-filled where no meaningful value can be entered. Any null-filled component is wholly null-filled to clearly indicate a downstream decoder that the component is not valid.

### The Time-Date Format

The date-time format is 8 bytes where the first 4 bytes are a UTC (Universal Time Code) based time component. The time is defined either by an AES3 32-bit audio sample clock or SMPTE 12M depending on the essence type. The second 4 bytes define the date based on the Modified Julian Data (MJD) as defined in SMPTE 309M. This counts up to 999,999 days after midnight on the 17th November 1858 and allows dates to the year 4597.

### The Spatial Co-ordinate Format

The spatial co-ordinate value consists of three components defined as follows:
•Altitude: 8 decimal numbers specifying up to 99,999,999 metres.
•Longitude: 8 decimal numbers specifying East/West 180.00000 degrees (5 decimal places active).
•Latitude: 8 decimal numbers specifying North/South 90.00000 degrees (5 decimal places active).

The Altitude value is expressed as a value in metres from the centre of the earth thus allowing altitudes below the sea level.

It should be noted that although spatial co-ordinates are static for most clips, this is not true for all cases. Material captured from a moving source such as a camera mounted on a vehicle may show changing spatial co-ordinate values.

### Country Code

The Country code is an abbreviated 4-byte alpha-numeric string according to the set defined in ISO 3166. Countries which are not registered can obtain a registered alpha-numeric string from the SMPTE Registration Authority.

### Organisation Code

The Organisation code is an abbreviated 4-byte alpha-numeric string registered with SMPTE. Organisation codes have meaning only in relation to their registered Country code so that Organisation codes can have the same value in different countries.

### User Code

The User code is a 4-byte alpha-numeric string assigned locally by each organisation and is not globally registered. User codes are defined in relation to their registered Organisation and Country codes so that User codes may have the same value in different organisations and countries.

### Metadata Set

Referring to Figure 4, the UMID and the other metadata (the data items a) to g) for example) are organised in a metadata set, one example of which is shown in Figure 4.

The set starts with a label 40 and the UMID 41 is the first metadata item in the set.

The label comprises a SMPTE Universal label 40 of 16 bytes and which identifies the set as a SMPTE registered metadata set. The Universal Label is used to identify the metadata set and the last non-zero byte is a number which defines the size of the local Type word. A value of '1' means that the Type word is 1-byte in length, '2' means a 2-byte Type word etc. The label is followed by a Length value (1 byte) for the total length of all the metadata items in the set. The Length value is variable length encoded for efficiency.

In Figure 4, the UMID 41 occupies metadata item 1 after the label. The UMID may be as shown in Figure 3 or in Figure 7. The following description assumes the UMID is as described with reference to Figure 7 including the optional signature metadata. Thus metadata item 1 has 55 bytes as shown in Figure 7.

Each metadata item has a sub-format which comprises a registered local 'Type' identifier (T), followed by a variable 'Length' field (L) and the metadata 'Value' as defined by the metadata 'Type' identifier. It will be appreciated that the UMID has the same format.

In this example the 'Type' identifier of each item has one or two bytes and the Length value of each item has one byte.

The 'Type' and 'Length' fields of each item are followed by a 'value' field containing data, which in the present embodiment of the invention, is a portion of the data items a) to g). The metadata items 2 to n contain the descriptive data and the technical data a) to g) discussed above.

The 200 bytes of the metadata set of Figure 4 are allocated to the 32 user bits (4 bytes) of a sequence of 50 Time codes.

The 76 bytes of the set label 40 + UMID 41 + CRC alone occupy 19 time codes. A metadata set of 200 bytes has a duration of 50 fields or one second at 50 fields/second. To record all the information, i.e. the UMID and the data items a) to g), a metadata set is allocated to a succession of time codes of a clip. The time codes are recorded in the linear time code track LTC and are also recorded in the helical tracks in the VITC.

Referring to Figure 5, each clip has a metadata set comprising a UMID and other metadata recorded in the user bit of the time codes of the clip. One UMID refers to the whole clip, and to both the video and audio data of the clip. The metadata set is repeated as often as the length of the clip allows. The CRC is recorded at the end of the clip and indicates the end of the repetition of the metadata set. The end of the clip may occur before the end of a complete metadata set.

### Modification

Referring to Figure 6 merely a single UMID and a CRC may be recorded in the user bits of the time code instead of a metadata set comprising a UMID and other metadata as shown in Figure 4. The UMID of Figure 6 is a basic UMID of 32 bytes having a 12 byte universal label , a length byte L, 3 bytes of instance number and 16 bytes of material number. However the UMID of Figure 6 may be an extended UMID of 32 bytes as shown in Figure 3.

### Linking to a database

The allocation of the metadata to the user bits of time codes results in a very low data rate of 200 bytes per second as a maximum rate and so allows only a small amount of data to be recorded. It is desirable to provide more metadata relating to the material recorded on the tape.

Referring to Figure 8, a digital video source, e.g. a camcorder 60 outputs audio A, video V and the user bits of the time codes TC on respective outputs. The user bits of the time codes TC include the UMID(s) and other metadata a) to g). The user bits are transmitted to a data base 64, via a suitable link.

The database 64 in this example comprises a data base program run on a standard personal computer (PC) or a lap-top computer having a keyboard 67 for data entry, a display 65 and a systems unit 66.

The database 64 stores more extensive and detailed metadata, including the UMID(s) recorded in the time codes on the tape. The UMID(s) on the tape and in the database allow clear and unique linking of the material on the tape, and of the tape on which the material is recorded, to the database.

The camcorder 60 includes a computer 61 linked via a suitable link 62 (e.g. RS 232) to a data entry device 68 such as a keyboard.

Metadata which is additional to the UMID is entered by the operator using the keyboard. The computer generates the UMID (whether basic or extended or having the data-reduced structure shown in Figure 7) and formats the other metadata into the data structure of Figure 4, 6 or 7. A multiplexer 63 inserts the data structure in known manner into the user bits of the Time codes.

The computer 66 may be linked to Global Positioning System (GPS) to generate the spatial co-ordinates of the extended UMID.

The more extensive metadata is entered into the database 64 using the data entry device such as the a keyboard 67.

Metadata entered into the database 64 may be recorded in the user bits of the time codes on the tape in the camcorder by transmitting the data to the camcorder via the link 63.

Whilst the UMID is the unique identifier linking the metadata in the database to the essence recorded on the tape, the essence may in principle be accessed via any field of the database using techniques normal in databases.

The source 60 may be a tape recorder or a disc recorder.

If the source 60 is a camcorder it may include a disc recorder and/or a tape recorder.

### References

[1] Introduction to the 4:2:2 Digital Video Tape Recorder - Stephen Gregory Pentech Press 1998, ISBN 0-7273-0903-X
[2] EBU/SMPTE Task Force for Harmonised Standards for the Exchange of Programme Material as Bit Streams, Final Report: Analyses and Results, Sept 1998.
[3] EBU/IFTA Forum "Paving the Way to Future TV Archives", Vienna, 18 June 1999, M.F. Vetter, TASC Inc.
[4] MPEG2 - ISO/IEC/ 13818-2

## Claims

1. A method of recording information relating to a sequence of data fields, each of which fields has associated therewith a timecode identifying the said field, the code having time bits which identify the field and user bits which are definable by a user, in which method bits of additional data relating to the said sequence, and comprising a number of bits greater than the number of user bits in a single timecode, are allocated to user bits of a plurality of time codes of the said sequence.

2. A method according to claim 1 wherein the said data fields are video fields or frames.

3. A method according to claim 1 or 2, wherein the additional data includes a Unique Material Identifier (UMID).

4. A method according to claim 1 or 2, wherein the additional data includes at least one byte which is a representation of a UMID , the representation containing fewer bits than the UMID it represents.

5. A method according to claim 1, 2, 3 or 4, wherein the additional data includes data descriptive of the content of the video sequence.

6. A method according to claim 1, 2, 3, 4 or 5, wherein the additional data includes technical data relating to the video sequence.

7. A method according to claim 1, 2, 3, 4, 5 or 6, wherein the additional data is arranged in a format comprising a plurality of bytes representing a label identifying the format, at least one byte representing a length value indicating the number of bits of additional data in the format, and a plurality of data bytes representing the additional data.

8. A method according to claim 7, wherein the data bytes are arranged in one or more sub-formats each comprising a plurality of bytes representing a label identifying the sub-format, at least one byte representing a length value indicating the number of bits of additional data in the sub-format, and a plurality of data bytes representing additional data in the sub-format.

9. A method of linking recorded material including a sequence of data fields to a database, comprising
a) providing a database for containing metadata relating to recorded material, the metadata in the database including an identifier which uniquely identifies the material,
b) recording with the recorded material an identifier or a representation of an identifier having fewer bits than the represented identifier, and other metadata, the identifier or the representation and other metadata being allocated to user bits of a plurality of time codes of the said sequence, which time codes are recorded with the material, and
c) reproducing the identifier or representation and other metadata from the recorded material, and
d) using the reproduced identifier or representation to access further metadata including the same identifier stored in the database and relating to the material.

10. A method according to claim 9, wherein the identifier is a UMID.

11. A method according to claim 9 or 10, wherein the amount of the said further metadata recorded with the said material is smaller than the amount of the said further metadata stored in the database.

12. A method according to claim 9, 10 or 11, wherein the data fields are video fields or frames.

13. A recorder for recording material including a sequence of data fields, the recorder including
a generator for generating an identifier which uniquely identifies the material or a representation of the identifier having fewer bits than the represented identifier, and
a coder for inserting the identifier or the representation thereof into the user bits of a plurality of time codes of the said sequence.

14. A recorder according to claim 13, wherein the data fields are video fields or frames.

15. A recorder according to claim 13 or 14 wherein the identifier is a UMID.

16. A recorder according to claim 13, 14 or 15, wherein the generator includes a data entry device for generating metadata additional to the identifier or the representation thereof, the coder inserting the UMID or the representation together with the metadata into the said plurality of time codes.

17. A recorder according to claim 16, wherein the additional data includes data descriptive of the content of the sequence.

18. A recorder according to claim 16 or 17, wherein the additional data includes technical data relating to the sequence.

19. A recorder according to claim 16, 17 or 18, wherein the additional data is arranged in a format comprising a plurality of bytes representing a label identifying the format, at least one byte representing a length value indicating the number of bits (of additional data) in the format, and a plurality of data bytes representing the additional data.

20. A recorder according to claim 19, wherein the data bytes are arranged in one or more sub-formats each comprising a plurality of bytes representing a label identifying the sub-format, at least one byte representing a length value indicating the number of bits (of additional data) in the sub-format, and a plurality of data bytes representing additional data in the sub-format.

21. A system for linking recorded material including a sequence of data fields to a database, comprising
a database for containing metadata relating to recorded material, the metadata in the database including an identifier which uniquely identifies the material,
a recorder for recording with the recorded material an identifier or a representation of the identifier having fewer bits than the represented identifier, and other metadata, the identifier or the representation and other metadata being allocated to user bits of a plurality of time codes of the said sequence, which time codes are recorded with the material,
a data transmission link linking the recorder to the database, and
a deriver in the database for deriving the identifier and other metadata from the transmitted recorded material,
the database using the derived identifier to access further metadata including the same identifier stored in the database and relating to the material.

22. A system according to claim 21, wherein the data fields are video fields or frames.

23. A system according to claim 21 or 22, wherein the identifier is a UMID.
